# EUROPÄISCHE PATENTSCHRIFT

(11) **EP 3 695 469 B1**
(45) Veröffentlichungstag und Bekanntmachung des Hinweises auf die Patenterteilung: **31.05.2023**
(21) Anmeldenummer: 18783006.2
(22) Anmeldetag: 08.10.2018
(51) Int. Cl.: H01R 43/16, H01R 43/02, B23K 20/12, H01R 4/02, B23K 101/38

(54) **ELEKTRISCHE LEITUNGSANORDNUNG MIT DIREKTKONTAKTIERUNG UND VERFAHREN ZU DEREN HERSTELLUNG**
ELECTRIC LINE ASSEMBLY WITH DIRECT CONTACTING, AND METHOD FOR PRODUCING SAME
SYSTÈME DE LIGNE ÉLECTRIQUE À MISE EN CONTACT DIRECTE ET PROCÉDÉ DE PRODUCTION DUDIT SYSTÈME

(30) Priorität: 13.10.2017 DE 102017123864
(43) Veröffentlichungstag der Anmeldung: 19.08.2020
(73) Patentinhaber: Lisa Dräxlmaier GmbH, 84137 Vilsbiburg (DE)
(72) Erfinder: GOETZMANN, Christoph, Vilsbiburg 84137 (DE); SPECHT, Klaus, 84144 Geisenhausen (DE); FORSTMEIER, Christoph, Landshut 84028 (DE)
(86) Internationale Anmeldenummer: PCT/EP2018/077315
(87) Internationale Veröffentlichungsnummer: WO 2019/072760

(56) Entgegenhaltungen:
- DE-B3-102013 101 876
- JP-A- 2005 129 498
- US-A- 3 566 008
- US-A- 3 656 092
- US-B2- 6 759 594
- US-B2- 9 225 076

## Beschreibung

### Technisches Gebiet

Die vorliegende Erfindung betrifft ein Verfahren zum Herstellen einer elektrischen Leitungsanordnung durch stoffschlüssiges Fügen eines freien Endes eines elektrischen Leiters an ein Metallbauteil. Ferner betrifft die Erfindung eine solche elektrische Leitungsanordnung. Insbesondere ist eine Direktkontaktierung zwischen dem Leiter und dem Metallbauteil vorgesehen.

### Stand der Technik

Insbesondere in Kraftfahrzeugen werden in elektrischen Leitungsanordnungen häufig leichtbauende Aluminium-Leiter eingesetzt, die sich aufgrund des Fließverhaltens des Aluminiums mechanisch nur schwierig verbinden lassen. Denn wird z.B. ein Crimpverfahren zum Verbinden des Leiters mit einem elektrischen Kontaktteil als Zwischenteil zu einem Gegenstück des Leiters eingesetzt, kann das Aluminium des Leiters noch innerhalb des Produktlebenszyklus der Leitungsanordnung durch sein Fließverhalten so weit nachgeben, dass sich das Kontaktteil ungewünscht lockert. Deshalb wird immer häufiger unter Aussparung des Kontaktteils eine Direktkontaktierung zwischen dem Leiter und dem Gegenstück der Leitungsanordnung vorgesehen.

Aber auch die Direktkontaktierung des Aluminium-Leiters mit dem Gegenstück gestaltet sich schwierig, da dies häufig durch Ultraschallschweißverfahren bewerkstelligt werden soll. Denn zum einen lassen sich diese Ultraschallschweißverfahren nur indirekt über wenige Prozessparameter überwachen, was sich nachteilig auf die Prozesssicherheit auswirkt und eine entsprechende Qualitätsprüfung nach sich ziehen kann. Zum anderen kann sich das Einbringen des Ultraschalls in eine Leitungsanordnung auch dahingehend nachteilig auswirken, dass sich andere Komponenten infolge der ultraschallbedingten Vibrationen lockern oder zumindest vorgeschädigt werden.

Neben den Ultraschweißverfahren ist aber z.B. aus der DE 10 2013 101 876 B3 ein Reibschweißverfahren bekannt, mit dem sich insbesondere Litzenleiter mit einem elektrischen Kontaktteil stoffschlüssig fügen lassen. Für den Fall eines Litzenleiters wird dabei ein Bündel von Einzelsträngen über eine Eintrittsöffnung in eine Aufnahmehülse des Kontaktteils eingeführt. Dann wird zum Herstellen einer stoffschlüssigen Fügeverbindung zumindest zwischen einer Teilanzahl der Einzelstränge mit der Innenwand der Aufnahmehülse mittels eines Reibschweißwerkzeugs Schweißenergie eingespeist. Obwohl damit hochwertige Schweißverbindungen mit hoher Prozesssicherheit hergestellt werden können, wäre eine Direktkontaktierung mit einem Gegenstück des Leiters unter Aussparung des Kontaktteils wünschenswert.

Die JP 2005 129498 A offenbart ein Verfahren zum Verbinden einer Sammelschiene mit einem leitenden Element und eine Sammelschiene.

Die DE 10 2013 101 876 offenbart ein Verfahren zum stoffschlüssigen Fügen eines Kabels mit einem Anschlusselement sowie konfiguriertes Kabel. Die US 3 656 092 A offenbart eine Vorrichtung zum geschweißten Verbinden einer elektrischen Leitung. Die US 922 507 6 B2 offenbart ein Verbindungselement für einen elektrischen Leiter. Die US 356 600 8 A offenbart eine mechanische und elektrische Verbindung zwischen Leitern aus Aluminium und Kupfer. Die US 675 959 4 B2 offenbart einen Sensor für die Detektion einer Radgeschwindigkeit.

### Beschreibung der Erfindung

Die Aufgabe der Erfindung ist es daher, unter Einsatz konstruktiv möglichst einfacher Mittel eine Möglichkeit zum Direktkontaktieren eines Leiters mit einem Gegenstück zu schaffen.

Die Aufgabe wird durch den Gegenstand des unabhängigen Anspruchs gelöst. Vorteilhafte Weiterbildungen der Erfindung sind in den abhängigen Ansprüchen, der Beschreibung und den begleitenden Figuren angegeben.

Ein erfindungsgemäßes Verfahren eignet sich zum Herstellen einer elektrischen Leitungsanordnung durch stoffschlüssiges Fügen von vorzugsweise zwei Fügepartnern. Das stoffschlüssige Fügen erfolgt zumindest zwischen einem elektrischen Leiter und einem elektrisch leitfähigen Metallbauteil als im Prinzip weiteren Leiter. Das Verfahren umfasst dabei die folgenden Schritte:
- Umformen eines Teilabschnitts des Metallbauteils zum Ausbilden einer Aufnahmehülse. In anderen Worten wird die Aufnahmehülse also aus dem Metallwerkstoff des Metallbauteils einstückig damit ausgeformt. Das Ausformen kann durch ein geeignetes Umformverfahren erfolgen. Damit ist kein zusätzliches Bauteil zum Ausbilden Aufnahmehülse notwendig.
- Einbringen des Leiters in die Aufnahmehülse. Bei einer isolierten elektrischen Leitung kann der Leiter vorab durch Abisolieren freigelegt werden. Vorzugsweise kann ein freies Ende des Leiters z.B. durch Einstecken in die Aufnahmehülse eingebracht werden.
- Ansetzen eines Reibschweißwerkzeugs an die Aufnahmehülse. Dabei kann das Reibschweißwerkzeug auch zumindest teilweise in die Aufnahmehülse eingebracht werden. Das Reibschweißwerkzeug, bei dem es sich beispielsweise um einen Dorn, Zylinder oder ähnliches zum vorzugsweise Rührreibschweißen handelt, kann z.B. mit einem oder mehreren Werkstückhaltern zusammenwirken, die das Metallbauteil und die Leitung fixieren.
- Bewegen des Reibschweißwerkzeugs relativ zu dem Metallbauteil und/oder dem Leiter zum Erzeugen von Schweißenergie zum zumindest teilweisen Aufschmelzen eines dem Leiter zugewandten Teilabschnitts, z.B. einer Innenwandung, des Metallbauteils und/oder des Leiters. Durch die Relativbewegung des Reibschweißwerkzeugs zu einem oder beiden der Fügepartner wird Reibung erzeugt, wodurch der jeweilige Werkstoff des Fügepartners aufgeschmolzen bzw. ausreichend plastifiziert wird und sich die beiden Fügepartner stoffschlüssig verbinden können.

Das erfindungsgemäße Verfahren bietet damit gleich mehrere Vorteile. So kann eine Direktkontaktierung zwischen dem Leiter und dem Metallbauteil erfolgen, wodurch kein zusätzliches Zwischen- oder Kontaktteil, wie etwa ein Kabelschuh oder ähnliches, mehr notwendig ist. Des Weiteren können aufgrund einer resultierenden gasdichten stoffschlüssigen Verbindung zwischen den Fügepartnern auch unterschiedliche Metallwerkstoffe miteinander verbunden werden, wie z.B. ein Aluminium-Metallbauteil mit einem Kupfer-Leiter. Die Aufnahmehülse ist vorzugsweise auch nach dem stoffschlüssigen Fügen noch an einer Seite offen oder zumindest einsehbar, so dass der Fügebereich optisch überprüft werden kann, z.B. auch durch ein Kamerasystem mit elektronischer Auswertung des Fügebereichs. Aufgrund der vergleichsweise einfachen Werkzeugausführung und des niedrigen Energieaufwands ist das Verfahren kostengünstig, erlaubt jedoch eine robuste Leitungsanordnung.

Eine besonders vorteilhafte Weiterbildung der Erfindung sieht vor, dass die Aufnahmehülse von einer Flachseite des Metallbauteils hervorsteht. Das Metallbauteil kann z.B. platten- oder blechförmig mit einer grundsätzlich flachen Quaderform ausgestaltet sein, so dass es zwei sich gegenüberliegende Schmalseiten und zwei sich gegenüberliegende Breit- bzw. Flachseiten hat. Vorzugsweise ist die Aufnahmehülse aus einem Werkstoffabschnitt der Flachseite ausgeformt. In anderen Worten kann die Aufnahmehülse also durch Umformen der Flachseite ausgebildet werden. Dies bietet u.a. den Vorteil, dass genug Werkstoff und Material zur Verfügung stehen, um die Aufnahmehülse materialeinheitlich mit dem Metallbauteil auszuformen. Die Längenerstreckung der Aufnahmehülse von der Flachseite ist u.a. davon abhängig, welche Materialstärke das Metallbauteil vor dem Umformen aufweist und welche Wandstärke die Aufnahmehülse nach dem Umformen hat. Es kann für eine großflächige stoffschlüssige Verbindung vorteilhaft sein, wenn sich die Aufnahmehülse im Zentimeterbereich von der Flachseite weg erstreckt.

Um insbesondere bei einem als Rundleiter ausgebildeten Leiter eine möglichst vollflächige Anlage des Leiters an die Aufnahmehülse zu erreichen, kann die Aufnahmehülse zylinderförmig ausgebildet sein. Sie kann damit insbesondere innen einen (kreis-)runden Querschnitt aufweisen.

Um die Leitungsanordnung möglichst kostengünstig bereitstellen zu können, kann die Aufnahmehülse mittels Tiefziehen oder Fließpressen ausgebildet werden. Der Werkzeugaufbau ist jeweils einfach und die Gestaltungsfreiheiten hinsichtlich der Werkstoffwahl und der Geometrie der Aufnahmehülse sind bei diesen Umformverfahren weitreichend.

Um eine gute stoffschlüssige Verbindung bei einem konstruktiv einfachen Aufbau des Reibschweißwerkzeugs zu erreichen, kann der Leiter während des Bewegens des Reibschweißwerkzeugs in etwa bündig mit einer freien Stirnkante der Aufnahmehülse ausgerichtet werden.

Um eine möglichst gute Anlage des Leiters an die Innenwandung der Aufnahmehülse zu erreichen und während des Ausbildens der stoffschlüssigen Verbindung idealerweise das Aufschmelzen der Fügepartner zu unterstützen, können der Leiter und die Aufnahmehülse miteinander verpresst werden.

Um vorteilhafterweise das freie Ende des Leiters mit der Aufnahmehülse zu verbinden, können der Leiter von einer offenen, ersten Stirnseite und das Reibschweißwerkzeug von einer dieser gegenüberliegenden, zweiten Stirnseite der Aufnahmehülse in diese eingebracht werden.

Die Erfindung lässt sich besonders vorteilhaft einsetzen, wenn das Metallbauteil eine elektrische Flachleiterschiene mit einem massiven bzw. zumindest biegesteifen Metallkern ist. Die Flachleiterschiene kann auch zumindest abschnittsweise mit einem Isolationsmantel elektrisch isoliert sein, wobei dieser vorzugsweise noch vor dem Umformen entfernt werden kann und wegen der Durchschlagfestigkeit eine Isolationsschichtstärke von 0,15 bis 2,5 mm, bevorzugt von 0,3 bis 0,7 mm, aufweisen kann. Die Metallkernbreite zur Metallkernhöhe kann ein Verhältnis von 7:1 bis 60:1 bei einer Metallkernhöhe von 0,5 bis 2,5 mm, bevorzugt von 1,0 bis 2,0 mm, aufweisen. Die Flachleiterschiene kann in einem Walz- oder Strangpressverfahren gefertigt werden. Als Werkstoff hat sich Aluminium mit einem Reinheitsgrad von größer oder gleich 99,5 % als zweckmäßig erwiesen, wobei grundsätzlich auch ein Kupferwerkstoff vorteilhaft einsetzbar ist. Durch die Direktkontaktierung werden jedenfalls ein Kontaktteil oder eine Steckverbindung als Zwischenteil eingespart.

Alternativ dazu kann die Erfindung auch vorteilhaft eingesetzt werden, wenn das Metallbauteil eine blechförmige, als Stanz-/Biegeteil ausgeführte Stromschiene ist. Solche finden z.B. in Stromverteilern oder Sicherungskästen von Kraftfahrzeugen Anwendung. Ein blechförmiges Material eignet sich besonders gut zum Umformen, da vergleichsweise wenig Energie benötigt wird. Auch hier ergibt sich der Vorteil, dass eine Direktkontaktierung zur Stromschiene erfolgen kann.

Es ist alternativ dazu auch möglich, dass das Metallbauteil ein Gehäuseabschnitt ist. Dadurch kann selbst ein Gehäuse direkt kontaktiert werden, wenn dieses eine elektrische Funktion erfüllt.

Es hat sich wegen der Einsatzhäufigkeit in der Praxis als zweckmäßig erwiesen, wenn der Leiter ein Rundleiter, vorzugsweise ein Litzenleiter, ist. Dieser muss vorteilhafterweise nicht mehr mit einem Kontaktteil versehen bzw. konfektioniert werden, so dass dieser Prozessschritt komplett eingespart werden kann. Rundleiter aus Vollmaterial oder mit Litzen werden häufig in Kraftfahrzeugen zur Versorgung elektrischer Lasten verwendet, so dass mit der vorstehend beschriebenen Direktkontaktierung auch eine hohe Anzahl von Kontaktteilen eingespart werden kann.

Das Reibschweißen eignet sich aufgrund der stoffschlüssigen sowie luftdichten oder gasdichten Verbindung gut für unterschiedliche Werkstoffpaarungen, insbesondere auch für Werkstoffpaarungen mit einerseits positiver und andererseits negativer Stellung in der elektrochemischen Spannungsreihe. Deshalb lässt sich die Erfindung besonders vorteilhaft einsetzen, wenn der Leiter oder das Metallbauteil aus einem Kupferwerkstoff und der andere Fügepartner aus einem Aluminiumwerkstoff gefertigt sind.

Um den Kontakt- bzw. Fügebereich zwischen dem Leiter und dem Metallbauteil insbesondere vor mechanischen Einflüssen zu schützen und ggf. auch nach außen elektrisch zu isolieren, kann die Aufnahmehülse mit dem daran gefügten Leiter mit einem formstabilen Kunststoffmaterial eingehaust werden. In anderen Worten kann um diesen Bereich ein Gehäuse angeordnet werden. Dieses kann z.B. als Spritzgussteil separat gefertigt und dann beispielsweise über eine Rastverbindung oder ähnliches um den Bereich herum an dem Metallbauteil und/oder dem Leiter befestigt werden.

Besonders vorteilhaft kann das Einhausen in das Kunststoffmaterial erfolgen, wenn die Aufnahmehülse und der Leiter mit dem Kunststoffmaterial umspritzt werden. Hierzu kann die Leitungsanordnung zumindest abschnittsweise in ein z.B. Spritzgusswerkzeug eingebracht und dort mit dem Kunststoffmaterial umspritzt werden.

Die Erfindung bezieht sich auch auf eine elektrische Leitungsanordnung, die vorzugsweise in einer oder mehreren der vorstehend beschriebenen Ausführungsvarianten hergestellt werden kann. Insbesondere weist diese das Metallbauteil auf, aus dem einstückig damit wenigstens eine Aufnahmehülse ausgeformt ist. Des Weiteren verfügt die Leitungsanordnung über wenigstens einen elektrischen Leiter, der zumindest abschnittsweise in der Aufnahmehülse angeordnet und stoffschlüssig damit verbunden ist.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: eine erfindungsgemäße elektrische Leitungsanordnung mit einer Direktkontaktierung eines elektrischen Leiters an einem flachen Metallbauteil,
- Figur 2: ein weiteres Ausführungsbeispiel einer erfindungsgemäßen Leitungsanordnung,
- Figur 3: die Leitungsanordnung aus Figur 2, bei der eine Aufnahmehülse und ein damit verbundener Leiter in einem Kunststoffgehäuse eingehaust sind,
- Figur 4: ein flaches Metallbauteil der Leitungsanordnung aus Figur 1, bei dem durch Umformen eine Aufnahmehülse ausgebildet ist, und
- Figur 5: die Leitungsanordnung aus Figur 1, bei der ein Leiter in einer Aufnahmehülse angeordnet und ein Reibschweißwerkzeug angesetzt ist.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

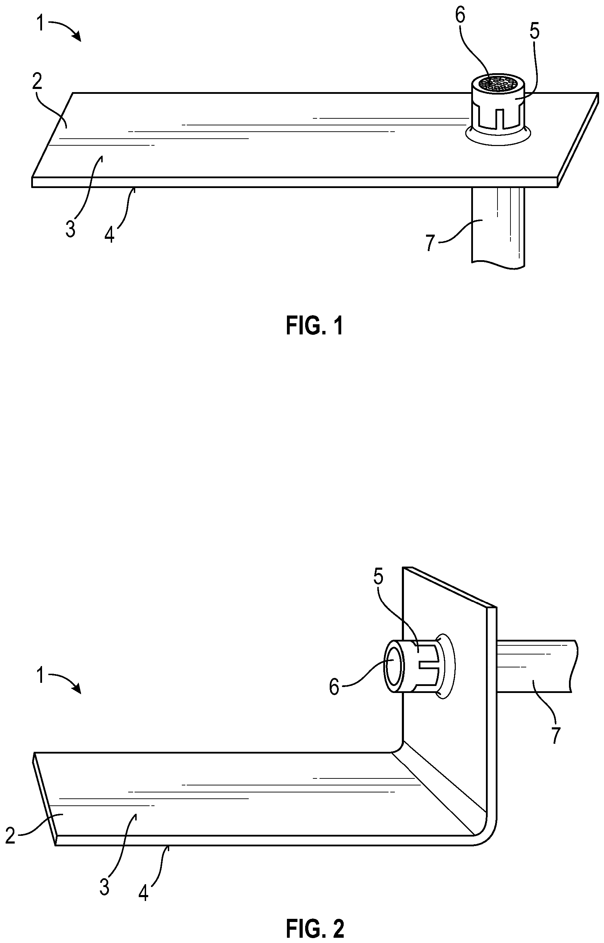

Figur 1 zeigt in einer perspektivischen Ansicht eine elektrische Leitungsanordnung 1, die sich insbesondere zum Einsatz in einem Kraftfahrzeug eignet. Die Leitungsanordnung 1 weist ein hier plattenförmiges und zumindest in dem gezeigten Teilabschnitt flaches Metallbauteil 2 auf, das in diesem Ausführungsbeispiel als Flachleiterschiene mit einem massiven bzw. biegesteifen Metallkern aus einem Aluminiumwerkstoff ausgeführt ist. Diese dient in dem Kraftfahrzeug beispielsweise als zentrale Stromversorgung, die sich beispielsweise entlang der Längsrichtung des Kraftfahrzeugs erstreckt, von einer Kraftfahrzeugbatterie gespeist und eine Mehrzahl von elektrischen Lasten versorgen kann.

Das Metallbauteil 2 hat zwei sich gegenüberliegende Breit- bzw. Flachseiten 3 und 4 als Grund- und Deckfläche und dazu senkrechte (nicht näher bezeichnete) Schmalseiten.

Direkt aus dem Aluminiumwerkstoff des Metallbauteils 2, also einstückig damit, ist eine Aufnahmehülse 5 durch ein weiter unten noch ausführlicher beschriebenes Umformverfahren ausgeformt, die sich hier hohlzylinderförmig von der (in Figur 1 oberen) Flachseite 4 des Metallbauteils 2 senkrecht weg erstreckt. Die Aufnahmehülse 5 ist an ihren Stirnseiten offen und bildet so eine Durchgangsöffnung in Dickenrichtung des Metallbauteils 2. Die Wandstärke der Aufnahmehülse 5 ist bedingt durch das hier verwendete Umformverfahren zumindest geringfügig geringer als die Materialstärke des Metallbauteils 2 um die Aufnahmehülse 5 herum.

In der Aufnahmehülse 5 des Metallbauteils 2 ist ein elektrischer Leiter 6 einer elektrischen Leitung abschnittsweise aufgenommen, nämlich mit seinem freien Ende, wobei es sich bei dem Leiter 6 hier exemplarisch um einen Litzenleiter aus einem Kupferwerkstoff handelt. Die den Leiter 6 aufweisende elektrische Leitung weist auch einen Isolationsmantel 7 auf, der im Bereich der Aufnahmehülse 5 durch Abisolieren entfernt ist, um eine elektrische Direktkontaktierung zwischen einer Innenwandung der Aufnahmehülse 5 und dem Leiter 6 zu gewährleisten. Der Leiter 6 ist mit der Aufnahmehülse 5 verpresst und stoffschlüssig verbunden, wie dies weiter unten noch detaillierter beschrieben ist.

Obwohl hier exemplarisch nur eine einzige Aufnahmehülse 5 gezeigt ist, kann das Metallbauteil 2 auch eine Mehrzahl von Aufnahmehülse 5 aufweisen, in denen jeweils ein Leiter 6 aufgenommen ist. Das Metallbauteil 2 kann im Falle einer Flachleiterschiene eine Längenerstreckung von mehreren Metern haben und somit zur Versorgung von einer Vielzahl von elektrischen Lasten dienen.

Figur 2 zeigt in einer perspektivischen Ansicht ein weiteres Ausführungsbeispiel der Leitungsanordnung 1, bei dem das Metallbauteil nicht durchgängig flach ist. Vielmehr weist das Metallbauteil 2 einen Winkel auf, der hier lediglich exemplarisch 90 ° beträgt. Abweichend davon ist es möglich, dass das Metallbauteil 2 insbesondere über seine Längserstreckung eine Wellenform oder ähnliche Formgebungen aufweist. In diesem Ausführungsbeispiel erstreckt sich die Aufnahmehülse 5, die wiederum direkt aus dem Aluminiumwerkstoff des Metallbauteils 2 ausgeformt ist, auch von der Flachseite 4 weg, die hier durch den Winkel allerdings mehrere zueinander abgewinkelte Abschnitte aufweist.

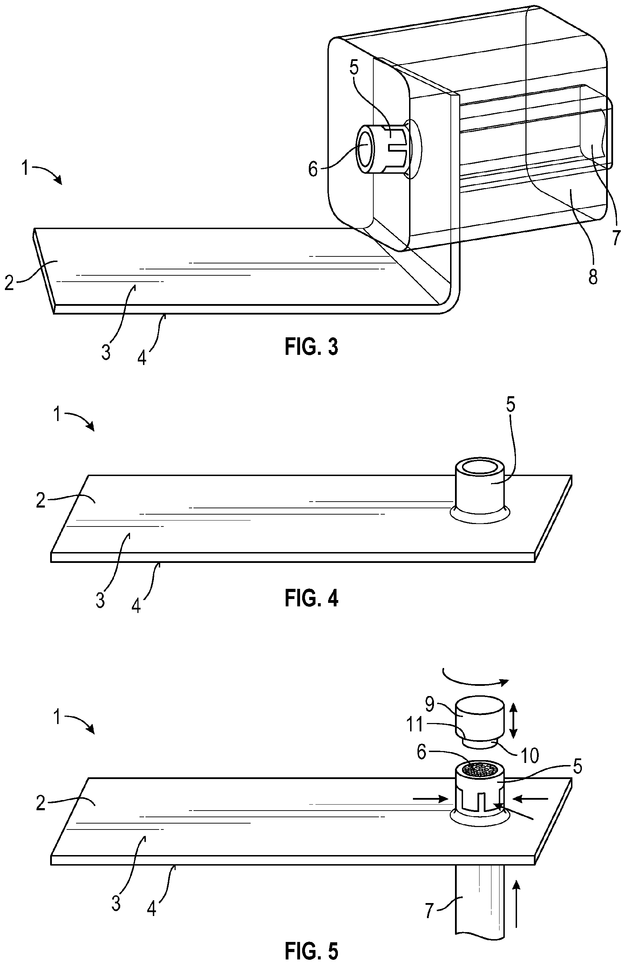

In Figur 3 ist ein weiteres Ausführungsbeispiel der Leitungsanordnung 1 gezeigt. Diese weist hier ein Gehäuse 8 aus einem Kunststoffmaterial, z.B. einem Thermoplast, auf. Das Gehäuse 8 umgibt im Wesentlichen die Aufnahmehülse 5 und den darin aufgenommenen Abschnitt des Leiters 6, um den dortigen Direktkontaktierungsbereich primär vor mechanischen Einflüssen zu schützen. In diesem Ausführungsbeispiel ist das Gehäuse 8 durch eine (nicht im Detail dargestellte) Rastverbindung an dem Metallbauteil 2 gehalten, wozu dieses beispielsweise eine Aussparung zum in Eingriff bringen mit einer (ebenfalls nicht dargestellten) Rastnase des Gehäuses 8 aufweist. Obwohl die Leitungsanordnung 1 hier mit dem oben beschriebenen Winkel versehen ist, also abgewinkelt ausgeführt ist, kann das Gehäuse 8 bzw. das Kunststoffmaterial auch bei einer flachen oder gewellten Ausgestaltung des Metallbauteils 2 vorgesehen sein.

Die Herstellung der Leitungsanordnung 1 kann wie nachfolgendend anhand der Figuren 4 und 5 beschrieben ablaufen.

Zunächst wird das Metallbauteil 2 als Rohling bereitgestellt, der den hier aus dem Aluminiumwerkstoff bestehenden Metallkern aufweist. Aus diesem wird durch ein Umformverfahren, wie beispielsweise durch Tiefziehen oder Fließpressen, die Aufnahmehülse 5 direkt ausgeformt, so dass die Aufnahmehülse 5 einstückig mit dem Metallbauteil 2 ausgebildet wird. Das dafür verwendete Umformwerkzeug ist an sich bekannt und hier der Übersichtlichkeit halber nicht dargestellt.

Dann wird der an seinem freien Ende abisolierte Leiter 6 von der (in Figur 4 oder 5 unteren) Flachseite 3 her in die Aufnahmehülse 5 durch Einstecken eingebracht und dann die Aufnahmehülse 5 mit einem (nicht dargestellten) Presswerkzeug, wie durch Pfeile angedeutet, radial miteinander verpresst. Dabei kann der Leiter 6 mit einer (in Figur 5 oberen) Stirnkante der Aufnahmehülse 5 bündig abschließen.

Schließlich wird ein Reibschweißwerkzeug 9 an den Leiter 6 sowie die Aufnahmehülse 5 in der angedeuteten Pfeilrichtung herangeführt. Das Reibschweißwerkzeug 9 hat in diesem Ausführungsbeispiel einen Pin 10, der über eine radial breitere Schulter 11 hervorsteht und so spätestens nach einem anfänglichen Aufschmelzen des Leiters 6 in die Aufnahmehülse 5 eintauchen kann, während die Schulter 11 auf der Stirnkante der Aufnahmehülse 5 aufliegt. Dies erfolgt unter Druck. Dann wird das Reibschweißwerkzeug 9 gegenüber dem Leiter 6 sowie der Aufnahmehülse 5 für einige Sekunden rotiert, wodurch zumindest einer der Werkstoffe plastifiziert wird und die stoffschlüssige Verbindung zwischen den beiden Fügepartnern hergestellt wird. Dabei sind die Durchmesser des Pins 10 und der Schulter 11 an den Querschnitt der Aufnahmehülse 5 bzw. deren Wandstärke angepasst.

### BEZUGSZEICHENLISTE

- 1: Elektrische Leitungsanordnung
- 2: Metallbauteil
- 3: Erste Flachseite
- 4: Zweite Flachseite
- 5: Aufnahmehülse
- 6: Elektrischer Leiter
- 7: Isolationsmantel
- 8: Gehäuse
- 9: Reibschweißwerkzeug
- 10: Pin
- 11: Schulter

## Patentansprüche

1. Verfahren zum Herstellen einer elektrischen Leitungsanordnung (1) durch stoffschlüssiges Fügen eines freien Endes eines elektrischen Leiters (6) an ein Metallbauteil (2), mit der Schritten:
- Umformen eines Teilabschnitts des Metallbauteils (2) zum Ausbilden einer Aufnahmehülse (5),
- Einbringen des Leiters (6) in die Aufnahmehülse (5),
- Ansetzen eines Reibschweißwerkzeugs (9) an der Aufnahmehülse (5) und
- Bewegen des Reibschweißwerkzeugs (9) relativ zu dem Metallbauteil (2) und/oder dem Leiter (6) zum Erzeugen von Schweißenergie zum zumindest teilweisen Aufschmelzen eines dem Leiter (6) zugewandten Teilabschnitts des Metallbauteils (2) und/oder des Leiters (6).

2. Verfahren nach Anspruch 1, **dadurch gekennzeichnet, dass** die Aufnahmehülse (5) von einer Flachseite des Metallbauteils (2) hervorsteht.

3. Verfahren nach Anspruch 1 oder 2, **dadurch gekennzeichnet, dass** die Aufnahmehülse (5) zylinderförmig ausgebildet ist.

4. Verfahren nach einem der vorhergehenden Ansprüche, **dadurch gekennzeichnet, dass** die Aufnahmehülse (5) mittels Tiefziehen oder Fließpressen ausgebildet wird.

5. Verfahren nach einem der vorhergehenden Ansprüche, **dadurch gekennzeichnet, dass** der Leiter (6) während des Bewegens des Reibschweißwerkzeugs (9) in etwa bündig mit einer freien Stirnkante der Aufnahmehülse (5) ausgerichtet wird.

6. Verfahren nach einem der vorhergehenden Ansprüche, **dadurch gekennzeichnet, dass** der Leiter (6) und die Aufnahmehülse (5) miteinander verpresst werden.

7. Verfahren nach einem der vorhergehenden Ansprüche, **dadurch gekennzeichnet, dass** der Leiter (6) von einer offenen, ersten Stirnseite und das Reibschweißwerkzeug (9) von einer dieser gegenüberliegenden, zweiten Stirnseite der Aufnahmehülse (5) in diese eingebracht werden.

8. Verfahren nach einem der vorhergehenden Ansprüche, **dadurch gekennzeichnet, dass** das Metallbauteil (2) eine elektrische Flachleiterschiene mit einem massiven Metallkern ist.

9. Verfahren nach einem der Ansprüche 1 bis 7, **dadurch gekennzeichnet, dass** das Metallbauteil (2) eine blechförmige, als Stanz-/Biegeteil ausgeführte Stromschiene ist.

10. Verfahren nach einem der Ansprüche 1 bis 7, **dadurch gekennzeichnet, dass** das Metallbauteil (2) ein Gehäuseabschnitt ist.

11. Verfahren nach einem der vorhergehenden Ansprüche, **dadurch gekennzeichnet, dass** der Leiter (6) ein Rundleiter, vorzugsweise ein Litzenleiter, ist.

12. Verfahren nach einem der vorhergehenden Ansprüche, **dadurch gekennzeichnet, dass** der Leiter (6) oder das Metallbauteil (2) aus einem Kupferwerkstoff und der andere Fügepartner aus einem Aluminiumwerkstoff gefertigt sind.

13. Verfahren nach einem der vorhergehenden Ansprüche, **dadurch gekennzeichnet, dass** die Aufnahmehülse (5) mit dem daran gefügten Leiter (6) mit einem formstabilen Kunststoffmaterial eingehaust wird.

14. Verfahren nach Anspruch 13, **dadurch gekennzeichnet, dass** die Aufnahmehülse (5) und der Leiter (6) mit dem Kunststoffmaterial umspritzt werden.

15. Elektrische Leitungsanordnung (1), hergestellt nach einem der vorhergehenden Ansprüche, mit
- einem Metallbauteil (2), aus dem einstückig wenigstens eine Aufnahmehülse (5) ausgeformt ist, und
- wenigstens einem elektrischen Leiter (6), der abschnittsweise in der Aufnahmehülse (5) angeordnet und stoffschlüssig damit verbunden ist.

## Claims

1. Method for producing an electrical line assembly (1) by integrally joining a free end of an electrical conductor (6) to a metal component (2), with the steps of:
- shaping a portion of the metal component (2) to form a receiving sleeve (5),
- inserting the conductor (6) into the receiving sleeve (5),
- attaching a friction welding tool (9) to the receiving sleeve (5) and
- moving the friction welding tool (9) relative to the metal component (2) and/or the conductor (6) to generate welding energy for at least partially melting a portion of the metal component (2) that is facing the conductor (6) and/or the conductor (6) .

2. Method according to Claim 1, **characterized in that** the receiving sleeve (5) protrudes from a flat side of the metal component (2).

3. Method according to Claim 1 or 2, **characterized in that** the receiving sleeve (5) is cylindrically formed.

4. Method according to one of the preceding claims, **characterized in that** the receiving sleeve (5) is formed by means of thermoforming or flow moulding.

5. Method according to one of the preceding claims, **characterized in that**, while the friction welding tool (9) is moving, the conductor (6) is aligned approximately flush with a free end edge of the receiving sleeve (5).

6. Method according to one of the preceding claims, **characterized in that** the conductor (6) and the receiving sleeve (5) are pressed together.

7. Method according to one of the preceding claims, **characterized in that** the conductor (6) is inserted into the receiving sleeve (5) from an open, first end face thereof and the friction welding tool (9) is inserted into the receiving sleeve (5) from a second end face thereof opposite from the first end face.

8. Method according to one of the preceding claims, **characterized in that** the metal component (2) is a flat electrical conductor rail with a solid core.

9. Method according to one of Claims 1 to 7, **characterized in that** the metal component (2) is a sheet-metal busbar configured as a stamped/bent part.

10. Method according to one of Claims 1 to 7, **characterized in that** the metal component (2) is a housing section.

11. Method according to one of the preceding claims, **characterized in that** the conductor (6) is a round conductor, preferably a stranded conductor.

12. Method according to one of the preceding claims, **characterized in that** the conductor (6) or the metal component (2) is produced from a copper material and the other element to be joined is produced from an aluminium material.

13. Method according to one of the preceding claims, **characterized in that** the receiving sleeve (5) with the conductor (6) joined thereto is enclosed in a dimensionally stable plastics material.

14. Method according to Claim 13, **characterized in that** the receiving sleeve (5) and the conductor (6) are overmoulded with the plastics material.

15. Electrical line assembly (1), produced according to one of the preceding claims, with
- a metal component (2), from which at least one receiving sleeve (5) is formed in one piece, and
- at least one electrical conductor (6), which in some sections is arranged in the receiving sleeve (5) and integrally connected thereto.

## Revendications

1. Procédé de fabrication d'un ensemble de lignes électriques (1) par assemblage par liaison de matière d'une extrémité libre d'un conducteur électrique (6) à un composant métallique (2), ledit procédé comprenant les étapes suivantes :
- transformer une portion du composant métallique (2) de manière à former un manchon de réception (5),
- introduire le conducteur (6) dans le manchon de réception (5),
- appliquer un outil de soudage par friction (9) au manchon de réception (5) et
- déplacer l'outil de soudage par friction (9) par rapport au composant métallique (2) et/ou au conducteur (6) afin de générer de l'énergie de soudage pour faire fondre au moins partiellement une portion du composant métallique (2) et/ou du conducteur (6) qui est dirigée vers le conducteur (6).

2. Procédé selon la revendication 1, **caractérisé en ce que** le manchon de réception (5) fait saillie d'un côté plat du composant métallique (2).

3. Procédé selon la revendication 1 ou 2, **caractérisé en ce que** le manchon de réception (5) est cylindrique.

4. Procédé selon l'une des revendications précédentes, **caractérisé en ce que** le manchon de réception (5) est formé par emboutissage profond ou extrusion.

5. Procédé selon l'une des revendications précédentes, **caractérisé en ce que** le conducteur (6) est aligné approximativement au ras d'un bord frontal libre du manchon de réception (5) lors du déplacement de l'outil de soudage par friction (9).

6. Procédé selon l'une des revendications précédentes, **caractérisé en ce que** le conducteur (6) et le manchon de réception (5) sont pressés ensemble.

7. Procédé selon l'une des revendications précédentes, **caractérisé en ce que** le conducteur (6) et l'outil de soudage par friction (9) sont introduits dans le manchon de réception (5) depuis un premier côté frontal ouvert respectivement depuis un deuxième côté frontal opposé audit premier côté frontal, dudit manchon de réception (5).

8. Procédé selon l'une des revendications précédentes, **caractérisé en ce que** le composant métallique (2) est un rail conducteur plat électrique pourvu d'une âme métallique pleine.

9. Procédé selon l'une des revendications 1 à 7, **caractérisé en ce que** le composant métallique (2) est une barre conductrice en tôle réalisée sous la forme d'une pièce emboutie/pliée.

10. Procédé selon l'une des revendications 1 à 7, **caractérisé en ce que** le composant métallique (2) est une portion de boîtier.

11. Procédé selon l'une des revendications précédentes, **caractérisé en ce que** le conducteur (6) est un conducteur rond, de préférence un conducteur toronné.

12. Procédé selon l'une des revendications précédentes, **caractérisé en ce que** le conducteur (6) ou le composant métallique (2) est en une matière à base de cuivre et l'autre partenaire d'assemblage est en une matière à base d'aluminium.

13. Procédé selon l'une des revendications précédentes, **caractérisé en ce que** le manchon de réception (5) est encapsulé, conjointement avec le conducteur (6) assemblé à celui-ci, avec une matière plastique de forme stable.

14. Procédé selon la revendication 13, **caractérisé en ce que** le manchon de réception (5) et le conducteur (6) sont enrobés avec la matière plastique.

15. Ensemble de lignes électriques (1), réalisé selon l'une des revendications précédentes, ledit ensemble comprenant
- un composant métallique (2) à partir duquel au moins un manchon de réception (5) est formé d'une seule pièce, et
- au moins un conducteur électrique (6) qui est disposé par portions dans le manchon de réception (5) et qui est relié à celui-ci par une liaison de matière.
